# EUROPEAN PATENT APPLICATION

(11) **EP 4 756 637 A1**
(43) Date of publication of application: **10.06.2026**
(21) Application number: 25206806.9
(22) Date of filing: 06.10.2025
(51) Int. Cl.: G06F 16/2452

(54) **AUTOMATIC RESPONSE DEVICE, AUTOMATIC RESPONSE METHOD, AND COMPUTER PROGRAM**

(30) Priority: 03.12.2024 JP 2024210661
(71) Applicant: TOYOTA JIDOSHA KABUSHIKI KAISHA, Toyota-shi, Aichi-ken 471-8571 (JP)
(72) Inventor: FUKUDA, Takashi, Toyota-shi, 471-8571 (JP); NISHIMOTO, Taro, Toyota-shi, 471-8571 (JP)
(74) Representative: J A Kemp LLP

(57) **Abstract**

The automatic response device (10) includes a memory part (14) for storing each of a plurality of vehicle signals linked to vehicle operation needs in a vector format, an input processing part (31) configured to vectorize an inquiry text corresponding to an input from a user, and a signal extraction part (32) configured to extract a vehicle signal suitable for the inquiry text from among the plurality of vehicle signals by comparing the inquiry text vectorized by the input processing part (31) with the vehicle operation needs.

## Description

### TECHNICAL FIELD

The present invention relates to an automatic response device, an automatic response method, and a computer program.

### BACKGROUND ART

Conventionally, generating answers to user inputs using natural language by using a generative AI model such as a large language model (LLM) is known. Patent Literature 1 describes that in order to improve the accuracy of the output of an LLM, a database corresponding to a user question is selected from a plurality of databases, and a prompt generated by adding information in the database to the question is input to the LLM.

### CITATION LIST

### [PATENT LITERATURE

PTL 1 Japanese Patent No. 7441366

### SUMMARY

### TECHNICAL PROBLEM

However, even if a database corresponding to a user question is selected, it is not always possible to extract information necessary to answer the question from the database. On the other hand, if all additional information related to the user input is input into the generative AI model, the computational load of the generative AI model increases. There are often restrictions on the number of tokens that can be input into the LLM of the generative AI model. Similar problems may occur when an algorithm other than an LLM is used to output a response to user input.

In light of the above problems, an object of the present invention is to efficiently acquire additional information for responding appropriately to user input.

### SOLUTION TO PROBLEM

The summary of the present disclosure is as follows.
(1) An automatic response device, comprising: a memory part for storing each of a plurality of vehicle signals linked to vehicle operation needs in a vector format; an input processing part configured to vectorize an inquiry text corresponding to an input from a user; and a signal extraction part configured to extract a vehicle signal suitable for the inquiry text from among the plurality of vehicle signals by comparing the inquiry text vectorized by the input processing part with the vehicle operation needs.
(2) The automatic response device described in above section (1), wherein in the memory part, two or more vehicle signals are linked to one vehicle operation need.
(3) The automatic response device described in above section (1) or (2), further comprising an information request part configured to request information from a server, wherein the automatic response device is provided in a vehicle, and the server is provided outside the vehicle, and the information request part is configured to transmit the inquiry text to the server when the vehicle signal was not extracted by the signal extraction part, and acquire information related to the inquiry text from the server.
(4) The automatic response device described in above section (3), further comprising an operation determination part configured to determine a vehicle operation which should be executed in response to the inquiry text based on the vehicle signal extracted by the signal extraction part, wherein the operation determination part is configured to determine the vehicle operation based on the information when the vehicle signal was not extracted by the signal extraction part.
(5) The automatic response device described in above section (1) or (2), further comprising an operation determination part configured to determine a vehicle operation which should be executed in response to the inquiry text based on the vehicle signal extracted by the signal extraction part.
(6) The automatic response device described in above section (4) or (5), further comprising a feedback part configured to acquire feedback of the user on the vehicle operation, wherein the operation determination part is configured to determine the vehicle operation based on a predetermined algorithm, and the feedback part is configured to improve the algorithm based on the feedback of the user.
(7) The automatic response device described in any one of above sections (4) to (6), wherein the operation determination part is configured to determine the vehicle operation based on the vehicle signal extracted by the signal extraction part and an image generated by a camera.
(8) The automatic response device described in above any one of sections (1) to (7), further comprising a data management part configured to manage data stored in the memory part, wherein the data management part is configured to add at least one of a new vehicle signal and a new vehicle operation need to the data in response to a predetermined trigger.
(9) An automatic response method executed by a computer, including storing each of a plurality of vehicle signals linked to vehicle operation needs in a vector format, vectorizing an inquiry text corresponding to an input from a user, and extracting a vehicle signal suitable for the inquiry text from among the plurality of vehicle signals by comparing the vectorized inquiry text with the vehicle operation needs.
(10) A computer program causing a computer to store each of a plurality of vehicle signals linked to vehicle operation needs in a vector format, vectorize an inquiry text corresponding to an input from a user, and extract a vehicle signal suitable for the inquiry text from among the plurality of vehicle signals by comparing the vectorized inquiry text with the vehicle operation needs.

### ADVANTAGEOUS EFFECTS OF INVENTION

According to the present disclosure, it is possible to efficiently acquire additional information for responding appropriately to user input.

### BRIEF DESCRIPTION OF DRAWINGS

FIG. 1 is a schematic configuration view of a vehicle including an automatic response device according to a first embodiment of the present invention.
FIG. 2 is a schematic configuration view of a UI.
FIG. 3 is a schematic configuration view of an automatic response device.
FIG. 4 is a functional block diagram of a processor of the automatic response device of the first embodiment of the present invention.
FIG. 5 is a flowchart showing a control routine for an operation determination process of the first embodiment of the present invention.
FIG. 6 is a schematic configuration view of an automatic response system including an automatic response device according to a second embodiment of the present invention.
FIG. 7 is a functional block diagram of a processor of the automatic response device of the second embodiment of the present invention.
FIG. 8 is a flowchart showing a control routine for an operation determination process of the second embodiment of the present invention.
FIG. 9 is a schematic configuration view of a vehicle including an automatic response device according to a third embodiment of the present invention.
FIG. 10 is a flowchart showing a control routine for an operation determination process of the third embodiment of the present invention.
FIG. 11 is a functional block diagram of a processor of an automatic response device of a fourth embodiment of the present invention.
FIG. 12 is a flowchart showing a control routine of a feedback process of the fourth embodiment of the present invention.
FIG. 13 is a functional block diagram of a processor of an automatic response device of a fifth embodiment of the present invention.
FIG. 14 is a flowchart showing a control routine for a data update process of the fifth embodiment of the present invention.

### DESCRIPTION OF EMBODIMENTS

Below, referring to the drawings, embodiments of the present invention will be explained in detail. It should be noted that, in the following explanation, similar elements will be assigned the same reference notations.

### <First Embodiment>

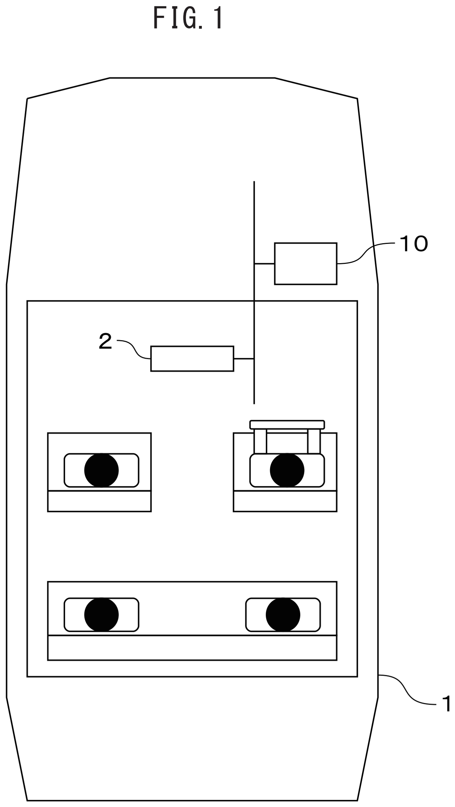

A first embodiment of the present invention will be described below with reference to FIGS. 1 to 5. FIG. 1 is a schematic configuration view of a vehicle 1 including an automatic response device 10 according to the first embodiment of the present invention. In the present embodiment, the vehicle 1 is a four-wheeled automobile. As shown in FIG. 1, the vehicle 1 includes a user interface (UI) 2 and an automatic response device 10. The UI 2 is electrically connected to the automatic response device 10 via an in-vehicle network conforming to a standard such as a Controller Area Network (CAN) or Ethernet, etc.

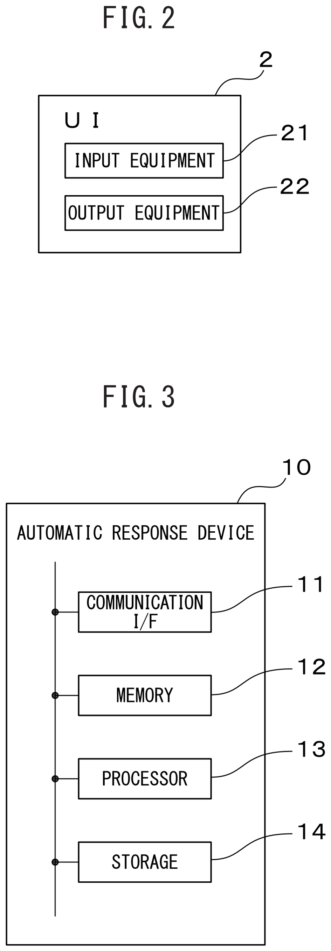

The UI 2 is provided in the vehicle cabin and transmits and receives information between the vehicle 1 and an occupant (for example, a driver) of the vehicle 1. FIG. 2 is a schematic configuration view of the UI 2. The UI 2 includes, for example, an input equipment 21 and an output equipment 22.

The input equipment 21 accepts input from the occupant of the vehicle 1. In the present embodiment, the input equipment 21 includes a microphone and accepts voice input from the occupant of the vehicle 1. The input equipment 21 may include a touch panel or the like in addition to or in place of the microphone. The UI 2 transmits input data input to the input equipment 21 by the occupant of the vehicle 1 to the automatic response device 10.

The output equipment 22 notifies the occupant of the vehicle 1. In the present embodiment, the output equipment 22 includes at least one of a display and a speaker. The UI 2 notifies the occupant of the vehicle 1 of information corresponding to a signal transmitted from the automatic response device 10 via the output equipment 22.

FIG. 3 is a schematic configuration view of the automatic response device 10. As shown in FIG. 3, the automatic response device 10 includes a communication interface 11, a memory 12, a processor 13, and a storage 14. The communication interface 11, the memory 12, and the storage 14 are connected to the processor 13 via signal lines. The communication interface 11, the memory 12, and the processor 13 may be configured as a single integrated circuit, or may be configured as separate circuits. The communication interface 11, the memory 12, and the processor 13 may be configured as a single electronic control unit (ECU) or a plurality of electronic control units.

The communication interface 11 has an interface circuit for connecting the automatic response device 10 to the in-vehicle network. The automatic response device 10 is connected to other in-vehicle equipment via the communication interface 11. For example, the communication interface 11 transmits signals received from the input equipment 21 of the UI 2 to the processor 13. Also, the communication interface 11 transmits a signal output from the processor 13 to the output equipment 22 of the UI 2.

The memory 12 has, for example, a volatile semiconductor memory (for example, a dynamic random-access memory (DRAM), a static random-access memory (SRAM), etc.), and a nonvolatile semiconductor memory (for example, a read-only memory (ROM), an electrically erasable programmable read-only memory (EEPROM), a flash memory, etc.). The memory 12 stores temporary data, computer programs (control programs for the automatic response device 10) used for various processes by the processor 13, setting data for the automatic response device 10, log data, vehicle information, etc.

The processor 13 has one or more central processing units (CPUs) and peripheral circuits therefor. The processor 13 executes computer programs stored in the memory 12. The processor 13 may further have other arithmetic circuits such as a logic arithmetic unit, a numerical arithmetic unit, or a graphics processing unit.

The storage 14 includes, for example, a hard disk drive (HDD), a solid-state drive (SSD), or an optical recording medium and an access device thereof. In the present embodiment, the storage 14 stores databases, which will be described later. The storage 14 is an example of a memory part.

The automatic response device 10 is provided in the vehicle 1 and responds to an input from a user such as an occupant of the vehicle 1. For example, the automatic response device 10 generates a response to an input from a user (hereinafter referred to as a "user input") using a generative AI model such as a large language model (LLM). For example, the automatic response device 10 generates an answer to a question from the user.

On the other hand, when user inputs a request regarding a vehicle operation to the automatic response device 10, the automatic response device 10 should output a vehicle operation corresponding to the user request as a response to the user input. However, since the generative AI model of the automatic response device 10 does not have the vehicle information necessary to determine the vehicle operation corresponding to the user request, there is a risk that it cannot generate an appropriate response. Thus, in the present embodiment, the automatic response device 10 uses retrieval augmented generation (RAG) technology to supplement the information input to the generative AI model.

In this case, it is conceivable to store vehicle signals related to vehicle operations in the storage 14 as vehicle information necessary for determining an appropriate vehicle operation, and input the vehicle signals in the storage 14 to the generative AI model in addition to the user input. However, it is unlikely that the user input will include a word indicating the vehicle signal itself related to the vehicle operation. Furthermore, even if the desired vehicle operation is the same, the user input for requesting the vehicle operation will be different for each user.

Thus, even if a database including a plurality of vehicle signals is constructed in the storage 14 in order to apply RAG technology, it is difficult to extract a vehicle signal suitable for responding to user input from the database. On the other hand, if all vehicle signals are input to the generative AI model, the computational load of the generative AI model increases. Further, there are often restrictions on the number of tokens that can be input into the LLM of the generative AI model.

Therefore, in the present embodiment, in the database, vehicle operation needs that may be issued by the user are linked to vehicle signals related to the vehicle operation needs, and an appropriate vehicle signal is extracted by comparing the user input with the vehicle operation needs. In the present embodiment, in order to compare the user input with the vehicle operation needs, vector format data of both is used. In other words, the user input and the vehicle operation needs are compared using a vector similarity search. As a result, the words of both can flexibly be interpreted when comparing the user input with the vehicle operation needs, whereby the vehicle operation needs that are most relevant to the user input, and thus, the vehicle signal that is suitable for processing the user input, can be extracted.

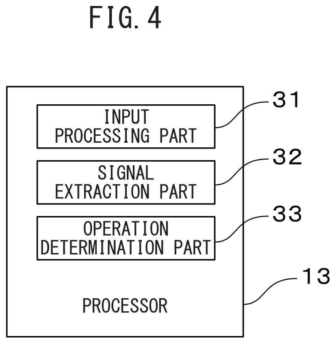

A specific configuration for realizing the processing described above will be described below. FIG. 4 is a functional block diagram of the processor 13 of the automatic response device 10 of the first embodiment of the present invention. As shown in FIG. 4, the processor 13 has an input processing part 31, a signal extraction part 32, and an operation determination part 33. The input processing part 31, the signal extraction part 32, and the operation determination part 33 are functional modules realized by the processor 13 of the automatic response device 10 executing computer programs stored in the memory 12 of the automatic response device 10. It should be noted that these functional modules may each be realized by a dedicated arithmetic circuit provided in the processor 13.

The input processing part 31 processes user input. The user input is typically natural language. First, the input processing part 31 creates an inquiry text corresponding to the user input based on the user input. For example, if the user input is voice input, the input processing part 31 creates the inquiry text by converting the voice data of the voice input into text data using voice recognition technology. It should be noted that if the user input is text input, the input processing part 31 may use the text input as-is as the inquiry text. The inquiry text is also referred to as a prompt.

The input processing part 31 then vectorizes the inquiry text. Specifically, the input processing part 31 encodes the inquiry text into a vector format. By vectorizing the inquiry text, the inquiry text, which is non-numeric data, is converted into a high-dimensional numerical vector. For example, the input processing part 31 vectorizes the inquiry text using an embedding model. Specific examples of the embedding model include Sentence Transformers, USE (Universal Sentence Encoder), Text-embedding-ada-002, etc.

On the other hand, in the storage 14, each of the plurality of vehicle signals linked to vehicle operation needs in a vector format is stored. The vehicle operation needs are vectorized in advance using an embedding model as described above, and are stored in the storage 14 as vector format data. Specifically, the storage 14 stores a plurality of vehicle operation needs as a vector database. The vehicle signals are dynamic signals which change depending on the state of the vehicle 1, and are updated in accordance with the state of the vehicle 1. It should be noted that the vehicle signals may be stored in a location different from the vehicle operation needs (for example, a storage device different from the storage 14) together with the corresponding relationships with the vehicle operation needs.

Examples of vehicle operation needs are "open the vehicle windows", "lower the temperature inside the vehicle". "turn on the wipers," etc. Examples of vehicle signals include a signal indicating the open/closed states of each window of the vehicle 1, a signal indicating the operating state of the air conditioner of the vehicle 1, a signal indicating the operating state of the wipers of the vehicle 1, etc. For example, a signal indicating the open/closed state of each window of vehicle 1 is linked to the vehicle operation need "open the vehicle windows", a signal indicating the operating state of the air conditioner is linked to the vehicle operation need "lower the temperature inside the vehicle", and a signal indicating the operating state of the wipers is linked to the vehicle operation need "turn on the wipers."

The signal extraction part 32 extracts a vehicle signal appropriate for the inquiry text, i.e., a vehicle signal required to properly respond to the inquiry text. First, the signal extraction part 32 compares the inquiry text vectorized by the input processing part 31 with the vehicle operation needs stored in the storage 14 in vector format. In other words, the signal extraction part 32 compares the inquiry text in vector format with the vehicle operation needs in vector format. The inquiry text in vector format is also referred to as a query vector.

Specifically, the signal extraction part 32 extracts the vehicle operation need that is most similar to the inquiry text from among the plurality of vehicle operation needs in the vector database stored in the storage 14 by vector similarity search. In the vector similarity search, cosine similarity, Euclidean distance, dot product, maximum inner product, etc., are used as an index of similarity between vectors. For example, the input processing part 31 performs the vector similarity search using a vector search algorithm such as an approximate nearest neighbor (ANN) algorithm. Specific examples of the ANN algorithm include k-d tree, LSH (Locality-Sensitive Hashing), HNSW (Hierarchical Navigable Small World), etc.

Next, the signal extraction part 32 extracts a vehicle signal linked to the vehicle operation need extracted by the vector similarity search. It should be noted that, in the storage 14, two or more vehicle signals may be linked to one vehicle operation need. In this manner, even if user input is associated with a complex vehicle operation need related to two or more vehicle signals, vehicle signals suitable for the vehicle operation need can be extracted. For example, a signal indicating the relative speed of vehicle 1 with respect to a preceding vehicle, and a signal indicating the distance from vehicle 1 to the preceding vehicle (the distance between vehicle 1 and the preceding vehicle) are linked to the vehicle operation need of "follow the preceding vehicle."

As described above, the signal extraction part 32 extracts a vehicle signal suitable for the inquiry text from among the plurality of vehicle signals by comparing the inquiry text vectorized by the input processing part 31 with the vehicle operation needs stored in the storage 14 in vector format. As a result, additional information for appropriately responding to user input can efficiently be acquired.

The operation determination part 33 determines a vehicle operation which should be executed in response to the inquiry text based on the vehicle signal extracted by the signal extraction part 32. For example, the operation determination part 33 inputs the inquiry text before being vectorized and the extracted vehicle signal to the generative AI model, and causes the generative AI model to output a vehicle operation which should be executed in response to the inquiry text. In this case, since a vehicle signal required to properly respond to the inquiry text is input to the generative AI model in addition to the inquiry text, the generative AI model can output a vehicle operation according to the user request. Thus, the accuracy of the output of the generative AI model can be improved by adding an appropriate vehicle signal to the input of the generative AI model.

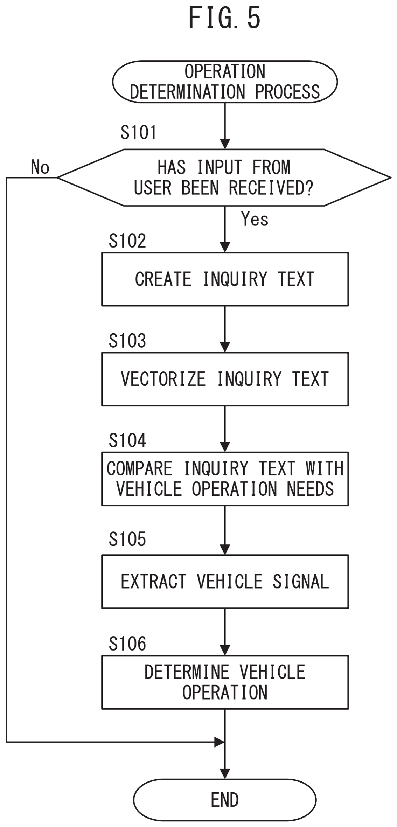

The flow of processing for executing the control described above will be described below with reference to FIG. 5. FIG. 5 is a flowchart showing a control routine for an operation determination processing of the first embodiment of the present invention. This control routine is repeatedly executed by the processor 13 of the automatic response device 10 in accordance with, for example, a computer program stored in the memory 12 of the automatic response device 10.

First, in step S101, the input processing part 31 of the processor 13 judges whether user input has been received. For example, if an occupant of the vehicle inputs voice into the microphone of the input equipment 21, the input processing part 31 judges that user input has been received when the voice input is transmitted from the input equipment 21 to the processor 13. If an occupant of the vehicle inputs text into a touch panel or the like of the input equipment 21, the input processing part 31 judges that user input has been received when the text input is transmitted from the input equipment 21 to the processor 13. When it is judged in step S101 that user input has not been received, this control routine ends.

On the other hand, when it is judged in step S101 that user input has been received, the control routine proceeds to step S102. In step S102, the input processing part 31 creates inquiry text corresponding to the user input based on the user input. For example, the input processing part 31 creates the inquiry text by converting the voice data of the voice input into text data using a voice recognition technology. It should be noted that when the user input is text input, the input processing part 31 may use the text input as the inquiry text without performing data conversion.

Next, in step S103, the input processing part 31 vectorizes the inquiry text. It should be noted that before vectorizing the inquiry text, preprocessing other than vectorization (for example, normalization, tokenization, stemming, etc.) may be performed on the inquiry text.

Next, in step S104, the signal extraction part 32 of the processor 13 compares the inquiry text in vector format with the vehicle operation needs in vector format, and extracts the vehicle operation need that is most similar to the inquiry text from the vector database in the storage 14. Next, in step S105, the signal extraction part 32 extracts a vehicle signal linked to the extracted vehicle operation need as a vehicle signal suitable for the inquiry text. It should be noted that in step S104, a plurality of vehicle operation needs (for example, two or three) may be extracted in order of decreasing similarity, and a vehicle signal linked to each of the plurality of vehicle operation needs may be extracted in step S105.

Next, in step S106, the operation determination part 33 of the processor 13 determines a vehicle operation which should be executed in response to the inquiry text based on the vehicle signal extracted by the signal extraction part 32. For example, the operation determination part 33 determines the vehicle operation by using the inquiry text and the vehicle signal as input to cause the generative AI model to output a response to the inquiry text. In this case, the generative AI model is stored in advance in the memory 12 or storage 14 of the automatic response device 10. After step S106, this control routine ends.

It should be noted that though the vehicle operation determined by the operation determination part 33 is executed by a means other than the automatic response device 10 (for example, an application installed in the vehicle 1, etc.) in the present embodiment, the operation determination part 33 may execute the determined vehicle operation. In this case, the operation determination part 33 performs an operation required to realize the vehicle operation by controlling an actuator, etc., of the vehicle 1.

Also, the processor 13 of the automatic response device 10 may perform the processes of steps S101 to S105, and a means other than the automatic response device 10 (for example, an application installed in the vehicle 1) may execute the process in step S106. In other words, the operation determination part 33 may be omitted from the automatic response device 10.

A specific example of a use case in which vehicle operation is determined using a vehicle signal in response to a user request will be described below. For example, the driver of vehicle 1 inputs voice saying, "Open the window of the driver halfway." In this case, "Open the vehicle windows" is extracted as the vehicle operation need that is most similar to the inquiry text. As a result, a signal indicating the open/closed state of each window of vehicle 1 is extracted as a vehicle signal linked to this vehicle operation need, and the extracted vehicle signal is input to the generative AI model together with the inquiry text.

In this case, the generative AI model is typically expected to output the following response. For example, when the vehicle signal indicates that the window of the driver is completely closed, the generative AI model outputs a vehicle operation to half-open the window of vehicle 1. On the other hand, when the vehicle signal indicates that the window of the driver is completely open, the generative AI model outputs a vehicle operation to half-close the window of vehicle 1. Further, when the vehicle signal indicates that the window of the driver is half-open, the generative AI model outputs a vehicle operation to notify the driver that the window of the driver is in the desired state.

### <Second Embodiment>

The configuration and control of the automatic response device according to a second embodiment are essentially the same as the configuration and control of the automatic response device according to the first embodiment, except for the points described below. Thus, the second embodiment of the present invention will be described below, focusing on the differences thereof from the first embodiment.

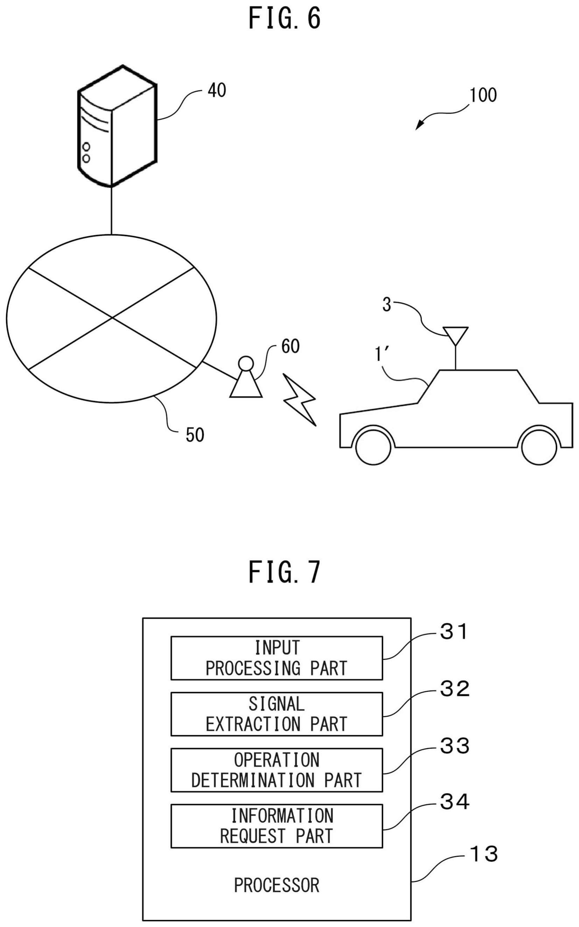

FIG. 6 is a schematic configuration view of an automatic response system 100 including an automatic response device 10 according to a second embodiment of the present invention. The automatic response system 100 includes a vehicle 1' and a server 40. The vehicle 1' includes a communication device 3 in addition to the UI 2 and the automatic response device 10 as shown in FIG. 1. The communication device 3 is capable of communicating with the outside of the vehicle 1' and enables communication between the vehicle 1' and the outside of the vehicle 1'. For example, the communication device 3 is a data communication module (DCM) enabling wide-area wireless communication.

The server 40 is provided outside the vehicle 1' and includes a communication interface, a storage, a memory, a processor, etc. The server 40 may be composed of a plurality of computers. The vehicle 1' can communicate with the server 40 via a communication network 50 such as a carrier network or the Internet and a wireless base station 60. The communication between the vehicle 1' and the wireless base station 60 is performed by a known wireless communication technology (for example, 3G, LTE, 4G, 5G, etc.).

In the first embodiment described above, it is assumed that vehicle operation needs similar to the inquiry text corresponding to the user input exist in the vector database of the storage 14. However, user inputs to the automatic response device 10 are various, and it is also assumed that vehicle operation needs similar to the inquiry text may not exist.

Therefore, in the second embodiment, when there are no vehicle operation needs similar to the inquiry text, i.e., when there is no vehicle signal suitable for the inquiry text, the automatic response device 10 acquires information regarding the inquiry text from the server 40 and determines a vehicle operation in accordance with the user request based on that information. As a result, the automatic response device 10 can be used to handle user requests other than vehicle operation needs.

FIG. 7 is a functional block diagram of the processor 13 of the automatic response device 10 of the second embodiment of the present invention. As shown in FIG. 7, the processor 13 has an information request part 34 in addition to the input processing part 31, the signal extraction part 32, and the operation determination part 33. The input processing part 31, the signal extraction part 32, the operation determination part 33, and the information request part 34 are functional modules realized by the processor 13 of the automatic response device 10 executing a computer program stored in the memory 12 of the automatic response device 10. It should be noted that each of these functional modules may be realized by a dedicated arithmetic circuit provided in the processor 13.

The information request part 34 requests information from the server 40. Specifically, when the signal extraction part 32 does not extract a vehicle signal, the information request part 34 transmits the inquiry text to the server 40 and acquires information related to the inquiry text from the server 40. When the signal extraction part 32 does not extract a vehicle signal, the operation determination part 33 determines the vehicle operation based on the information acquired by the information request part 34.

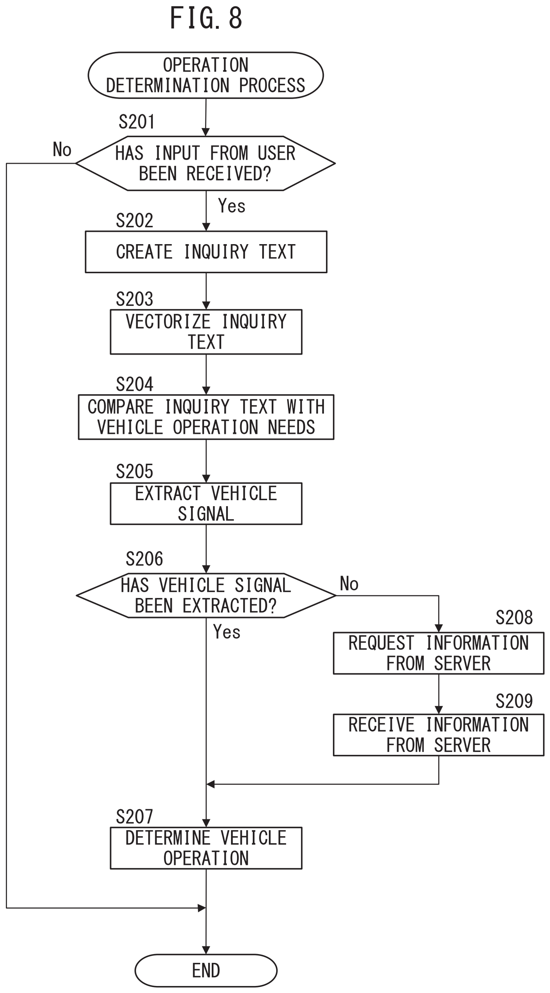

FIG. 8 is a flowchart showing a control routine of an operation determination process of the second embodiment of the present invention. This control routine is repeatedly executed by the processor 13 of the automatic response device 10 in accordance with, for example, a computer program stored in the memory 12 of the automatic response device 10.

Steps S201 to S205 are executed in the same manner as steps S101 to S105 of FIG. 5. However, in step S205, if there are no vehicle operation needs similar to the inquiry text, the signal extraction part 32 does not extract a vehicle signal suitable for the inquiry text. For example, when the similarity between all vehicle operation needs in the vector database and the inquiry text is equal to or less than a predetermined value, the signal extraction part 32 judges that there are no vehicle operation needs similar to the inquiry text. In this case, the signal extraction part 32 may return an output indicating that there is no vehicle signal suitable for the inquiry text ("no corresponding vehicle signal").

After step S205, in step S206, the information request part 34 judges whether a vehicle signal has been extracted by the signal extraction part 32. When it is judged that a vehicle signal has been extracted, this control routine proceeds to step S207, which is executed in the same manner as step S106 of FIG. 5.

On the other hand, when it is judged in step S206 that a vehicle signal has not been extracted, this control routine proceeds to step S208. In step S208, the information request part 34 requests information regarding the inquiry text from the server 40. Specifically, the information request part 34 transmits the inquiry text before being vectorized to the server 40. It should be noted that the inquiry text transmitted from the vehicle 1' to the server 40 may be vectorized by the input processing part 31.

The server 40, which has received the inquiry text, acquires information by, for example, inputting the inquiry text into a generative AI model (for example, an LLM) stored in the memory or storage of the server 40. In general, the server 40 has a higher tolerance for power consumption than the vehicle 1'. Further, the server 40 can build an expensive generative AI model using more processors than the generative AI model provided in the vehicle 1'. Thus, the number of parameters of the generative AI model of the server 40 can be made greater than the number of parameters of the generative AI model of the vehicle 1', and thus, the generative AI model of the server 40 can output an appropriate answer to a wide range of inquiry texts. It should be noted that the server 40 may acquire information related to the inquiry text by accessing a database outside the server 40 using the RAG technology.

After step S208, in step S209, the information request part 34 receives information regarding the inquiry text from the server 40. Next, in step S207, the operation determination part 33 determines a vehicle operation which should be executed in response to the inquiry text based on the information regarding the inquiry text transmitted from the server 40 to the vehicle 1' in place of the vehicle signal extracted by the signal extraction part 32. For example, the operation determination part 33 determines the vehicle operation by using the inquiry text and the information regarding the inquiry text as input to cause the generative AI model to output a response to the inquiry text. After step S207, this control routine ends.

A specific example of a use case in which the vehicle operation is determined using the information acquired by the server 40 in response to a user request will be described below. For example, the driver of vehicle 1' inputs voice saying, "Tell me the average maximum temperature in Tokyo next week." In this case, since there are no vehicle operation needs similar to the inquiry text, a vehicle signal is not extracted. As a result, the inquiry text is transmitted from vehicle 1' to the server 40, and the vehicle operation (for example, notification of an answer to the user question) is determined based on the information acquired by the server 40 (for example, weather forecast information for Tokyo).

### <Third Embodiment>

The configuration and control of the automatic response device according to a third embodiment are essentially the same as the configuration and control of the automatic response device according to the first embodiment, except for the points described below. Thus, the third embodiment of the present invention will be described below, focusing on the differences from the first embodiment.

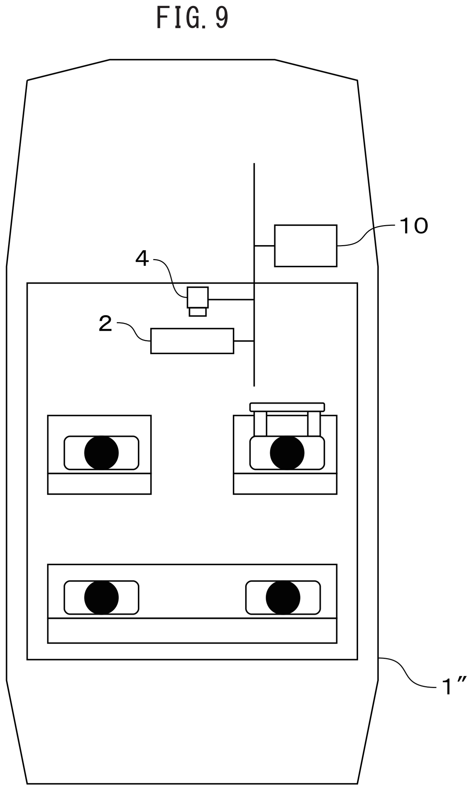

FIG. 9 is a schematic configuration view of a vehicle 1" including an automatic response device 10 according to a third embodiment of the present invention. In addition to the UI 2 and the automatic response device 10, the vehicle 1" includes an in-vehicle camera 4. The in-vehicle camera 4 captures the interior of the vehicle 1" to generate images of the occupants of the vehicle 1". The in-vehicle camera 4 is provided in the vehicle cabin such that all seats of the vehicle 1" are included in the captured area. For example, the in-vehicle camera 4 is attached near the top edge of the windshield of the vehicle 1". The in-vehicle camera 4 is one example of a camera.

In the third embodiment, the operation determination part 33 determines a vehicle operation which should be executed in response to the inquiry text based on the vehicle signal extracted by the signal extraction part 32 and the image generated by the in-vehicle camera 4. As a result, a more appropriate vehicle operation can be selected in response to the user request, taking into account the image information.

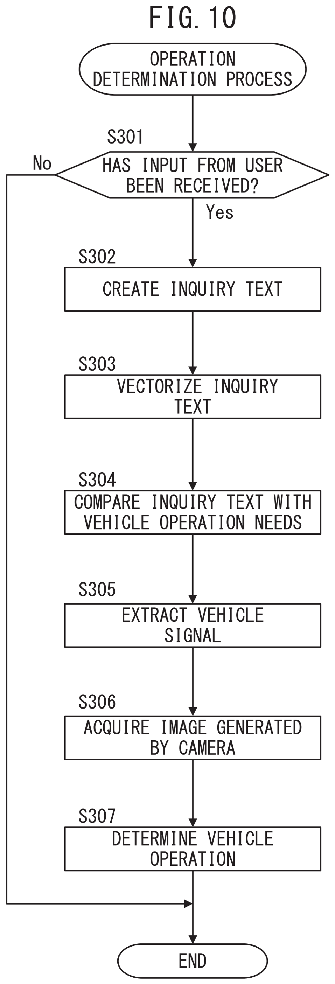

FIG. 10 is a flowchart showing a control routine of an operation determination process of the third embodiment of the present invention. This control routine is repeatedly executed by the processor 13 of the automatic response device 10 in accordance with, for example, a computer program stored in the memory 12 of the automatic response device 10.

Steps S301 to S305 are executed in the same manner as steps S101 to S105 of FIG. 5. After step S305, in step S306, the operation determination part 33 acquires the image generated by the in-vehicle camera 4.

Next, in step S307, the operation determination part 33 determines a vehicle operation which should be executed in response to the inquiry text based on the vehicle signal extracted by the signal extraction part 32 and the image generated by the in-vehicle camera 4. For example, the operation determination part 33 determines the vehicle operation by using the inquiry text, the vehicle signal, and the image as input to cause the generative AI model to output a response to the inquiry text. In other words, in the third embodiment, the operation determination part 33 determines the vehicle operation using a multi-modal generative AI model (for example, an LLM) to which text and images can be input.

A specific example of a use case in which vehicle operation is determined using a vehicle signal and an image in response to a user request will be described below. For example, the driver of vehicle 1" inputs voice saying, "Open the back seat windows." In this case, "Open the vehicle windows" is extracted as the vehicle operation need that is most similar to the inquiry text. As a result, a signal indicating the open/closed state of each window of vehicle 1" is extracted as the vehicle signal linked to this vehicle operation need, and the extracted vehicle signal and the image generated by the in-vehicle camera 4 are input to the generative AI model together with the inquiry text.

In this case, the generative AI model is typically expected to output an answer as follows. For example, when the vehicle signal indicates that the rear seat window is closed and the image indicates that a child is seated in the rear seat, the generative AI model outputs a vehicle operation for notifying the driver that opening the window may pose a danger to the child, or a vehicle operation for opening the rear seat window halfway.

It should be noted that the image referenced to determine the vehicle operation is not limited to the image generated by the in-vehicle camera 4. For example, an image generated by a camera installed in the vehicle 1" so as to capture the surroundings of vehicle 1", a camera installed in a surrounding vehicle of the vehicle 1", a surveillance camera installed on the road, etc., may be used. When an image generated by a camera installed outside vehicle 1" is used, the image is transmitted to vehicle 1" by vehicle-to-vehicle communication, road-to-vehicle communication, or wide-area communication.

### <Fourth Embodiment>

The configuration and control of the automatic response device according to a fourth embodiment are essentially the same as the configuration and control of the automatic response device according to the first embodiment, except for the points described below. Thus, the fourth embodiment of the present invention will be described below, focusing on the differences from the first embodiment.

As described above, the operation determination part 33 determines the vehicle operation using a generative AI model such as an LLM. In the generative AI model, many parameters (weights, etc.) of a neural network are determined by prior learning, and an algorithm for determining the vehicle operation is determined in accordance with these parameters. Thus, the operation determination part 33 determines the vehicle operation based on the predetermined algorithm.

However, users have different preferences, and the learned algorithm for determining the vehicle operation may not necessarily match the preferences of all users. Thus, in the fourth embodiment, user feedback on the vehicle operation determined in response to the user input is acquired, and the algorithm for determining the vehicle operation is improved based on the user feedback. As a result, the possibility that an answer which matches the preferences of the user will be output when the user uses the automatic response device 10 can be increased, thereby increasing user satisfaction.

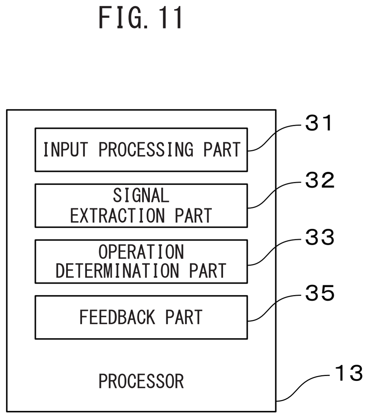

FIG. 11 is a functional block diagram of the processor 13 of the automatic response device 10 of the fourth embodiment of the present invention. As shown in FIG. 11, the processor 13 has a feedback part 35 in addition to the input processing part 31, the signal extraction part 32, and the operation determination part 33. The input processing part 31, the signal extraction part 32, the operation determination part 33, and the feedback part 35 are functional modules realized by the processor 13 of the automatic response device 10 executing computer programs stored in the memory 12 of the automatic response device 10. It should be noted that each of these functional modules may be realized by a dedicated arithmetic circuit provided in the processor 13.

The feedback part 35 acquires user feedback for the vehicle operation determined by the operation determination part 33. The feedback part 35 then improves the algorithm for determining the vehicle operation based on the user feedback.

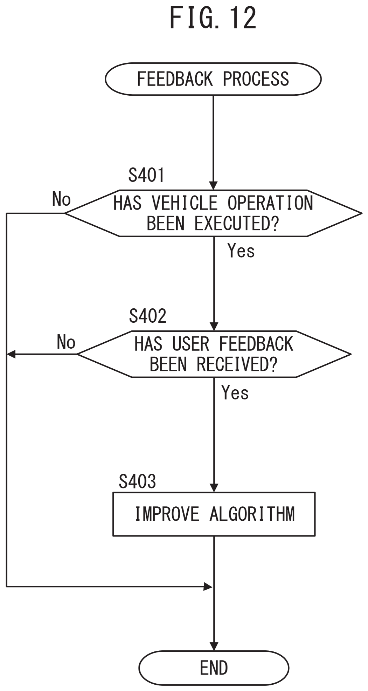

In the fourth embodiment, in addition to the control routine of the operation determination process of FIG. 5, a control routine of the feedback process of FIG. 12 is executed. FIG. 12 is a flowchart showing the control routine of the feedback process of the fourth embodiment of the present invention. This control routine is repeatedly executed by the processor 13 of the automatic response device 10 in accordance with, for example, a computer program stored in the memory 12 of the automatic response device 10.

First, in step S401, the feedback part 35 of the processor 13 judges whether the vehicle operation determined by the operation determination part 33 has been executed in the vehicle 1. When it is judged that the vehicle operation has not been executed, this control routine ends. On the other hand, when it is judged that the vehicle operation has been executed, this control routine proceeds to step S402.

In step S402, the feedback part 35 judges whether user feedback has been received. For example, the feedback part 35 judges that user feedback has been received when the user performs an operation to cancel the executed vehicle operation. As a specific example, the feedback part 35 judges that the user feedback has been received when the user performs a vehicle operation to close the driver's seat window after the vehicle operation to open the driver's seat window is executed.

It should be noted that when a vehicle operation is executed, the feedback part 35 may present a notification requesting feedback on the vehicle operation to the user via the UI 2. In this case, the user provides feedback by input such as voice input or touch panel operation, and the user feedback is transmitted from the input equipment 21 of the UI 2 to the processor 13.

When it is judged in step S402 that user feedback has not been received, this control routine ends. On the other hand, when it is judged in step S402 that user feedback has been received, this control routine proceeds to step S403.

In step S403, the feedback part 35 improves the algorithm for determining vehicle operation based on the user feedback. For example, the feedback part 35 updates the parameters of the generative AI model used for determining the vehicle operation based on the user feedback. In this case, the feedback part 35 updates the parameters of the generative AI model using a method such as reinforcement learning from human feedback (RLHF). After step S403, this control routine ends.

### <Fifth Embodiment>

The configuration and control of the automatic response device according to a fifth embodiment are essentially the same as the configuration and control of the automatic response device according to the first embodiment, except for the points described below. Thus, the fifth embodiment of the present invention will be described below, focusing on the differences from the first embodiment.

As described above, the storage 14 of the automatic response device 10 stores combinations of vehicle operation needs in vector format and vehicle signals linked to the vehicle operation needs. However, there is a risk that the data of the predetermined combinations alone will not be sufficient to respond to various requests from users. Thus, in the fifth embodiment, in response to a predetermined trigger, at least one of a new vehicle signal and a new vehicle operation need are added to the data in the storage 14. As a result, user requests that were not initially anticipated can be responded to, thereby increasing user satisfaction.

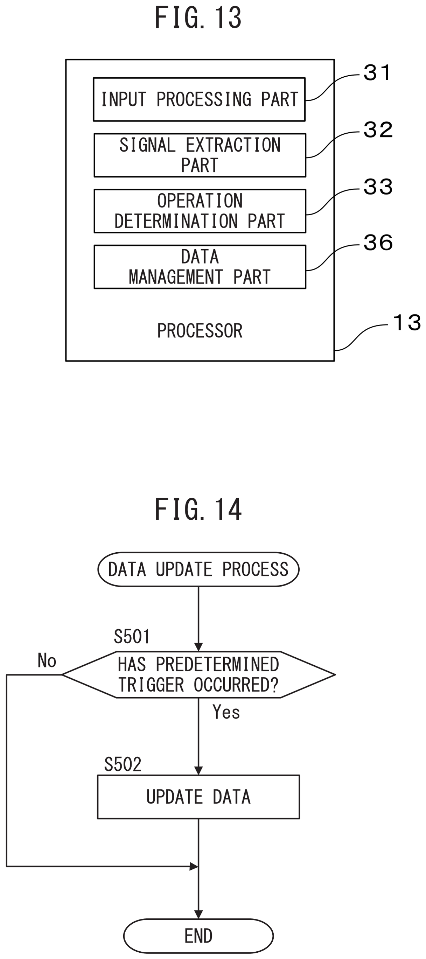

FIG. 13 is a functional block diagram of the processor 13 of the automatic response device 10 of the fifth embodiment of the present invention. As shown in FIG. 13, the processor 13 has a data management part 36 in addition to the input processing part 31, the signal extraction part 32, and the operation determination part 33. The input processing part 31, the signal extraction part 32, the operation determination part 33, and the data management part 36 are functional modules realized by the processor 13 of the automatic response device 10 executing computer programs stored in the memory 12 of the automatic response device 10. It should be noted that each of these functional modules may be realized by a dedicated arithmetic circuit provided in the processor 13.

The data management part 36 manages data stored in the storage 14, and specifically, data consisting of a combination of vehicle operation needs and vehicle signals. For example, the data management part 36 adds at least one of a new vehicle signal and a new vehicle operation need to the data in response to a predetermined trigger.

In the fifth embodiment, in addition to the control routine of the operation determination process of FIG. 5, a control routine of the data update process of FIG. 14 is executed. FIG. 14 is a flowchart showing the control routine of the data update process of the fifth embodiment of the present invention. This control routine is repeatedly executed by the processor 13 of the automatic response device 10 in accordance with, for example, a computer program stored in the memory 12 of the automatic response device 10.

First, in step S501, the data management part 36 of the processor 13 judges whether a predetermined trigger has occurred. The predetermined trigger is, for example, an update of the software of the vehicle 1. In this case, the data management part 36 judges that the predetermined trigger has occurred when the software of the vehicle 1 is updated via OTA (Over The Air) or the like. It should be noted that the predetermined trigger may be a data addition request by a user. In this case, the data management part 36 judges that the predetermined trigger has occurred when the user requests the addition of data via the input equipment 21 of the UI 2.

When it is judged in step S501 that the predetermined trigger has not occurred, this control routine ends. On the other hand, when it is judged in step S501 that the predetermined trigger has occurred, this control routine proceeds to step S502.

In step S502, the data management part 36 updates the data stored in the storage 14. Specifically, the data management part 36 adds at least one of a new vehicle signal and a new vehicle operation need to the data. When a vehicle operation need is added, the data management part 36 vectorizes the vehicle operation need and adds the new vehicle operation need in vector format to the data. When only a vehicle operation need is added, the new vehicle operation need is linked to at least one existing vehicle signal. On the other hand, when only a vehicle signal is added, the new vehicle signal is linked to at least one existing vehicle operation need.

When the predetermined trigger is a software update of the vehicle 1, the data management part 36 updates the data in accordance with, for example, a software update program. When the predetermined trigger is a data addition request by a user, the data management part 36 updates the data in accordance with, for example, the content input by the user to the input equipment 21. When the user requests the addition of a new vehicle operation need, the data management part 36 may determine a vehicle signal linked to the new vehicle operation need using a generative AI model such as an LLM.

After step S502, this control routine ends. It should be noted that the predetermined trigger may be, for example, the downloading of an application developed by the manufacturer of the vehicle 1 or a third party to the vehicle 1.

### <Other Embodiments>

Though the preferred embodiments of the present invention have been described above, the present invention is not limited to these embodiments, and various modifications and changes can be made within the scope of the claims. For example, the operation determination part 33 may use an algorithm other than a generative AI model to determine the vehicle operation which should be executed in response to the inquiry text.

Furthermore, in the first, third, fourth, or fifth embodiment, a server or the like which is provided outside the vehicle 1, 1" and which is capable of communicating with the vehicle 1, 1" may function as the automatic response device 10. In this case, for example, the storage of the server functions as the memory part, the processor of the server functions as the input processing part 31, the signal extraction part 32, the operation determination part 33, the feedback part 35, and the data management part 36, and information required for these functional modules to operate (for example, user input) is transmitted from the vehicle 1, 1" to the server.

The computer programs which cause the computer to realize the functions of each unit of the processor 13 of the automatic response device 10 may be provided in a form stored in a computer-readable recording medium or in a form included in a computer program product. The computer-readable recording medium is, for example, a magnetic recording medium, an optical recording medium, or a semiconductor memory.

The second embodiment to the fifth embodiment can be implemented in any combination. For example, when the second embodiment and the third embodiment are combined, in the control routine of FIG. 8, steps S306 and S307 of FIG. 10 are executed in place of step S207. Furthermore, when the fourth embodiment or the fifth embodiment is combined with the second embodiment, the control routine of FIG. 8 is executed in place of the control routine of FIG. 5 as the control routine of the operation determination process. Likewise, when the fourth embodiment or the fifth embodiment is combined with the third embodiment, the control routine of FIG. 10 is executed in place of the control routine of FIG. 5 as the control routine of the operation determination process. Further, all of the embodiments of the second embodiment to the fifth embodiment may be implemented in combination.

### REFERENCE SIGNS LIST

- 10: automatic response device
- 13: processor
- 14: storage
- 31: input processing part
- 32: signal extraction part

## Claims

1. An automatic response device (10), comprising:
a memory part (14) for storing each of a plurality of vehicle signals linked to vehicle operation needs in a vector format;
an input processing part (31) configured to vectorize an inquiry text corresponding to an input from a user; and
a signal extraction part (32) configured to extract a vehicle signal suitable for the inquiry text from among the plurality of vehicle signals by comparing the inquiry text vectorized by the input processing part (31) with the vehicle operation needs.

2. The automatic response device (10) according to claim 1, wherein in the memory part (14), two or more vehicle signals are linked to one vehicle operation need.

3. The automatic response device (10) according to claim 1 or 2, further comprising an information request part (34) configured to request information from a server (40), wherein
the automatic response device (10) is provided in a vehicle, and the server (40) is provided outside the vehicle, and
the information request part (34) is configured to transmit the inquiry text to the server (40) when the vehicle signal was not extracted by the signal extraction part (32), and acquire information related to the inquiry text from the server (40).

4. The automatic response device (10) according to claim 3, further comprising an operation determination part (33) configured to determine a vehicle operation which should be executed in response to the inquiry text based on the vehicle signal extracted by the signal extraction part (32), wherein
the operation determination part (33) is configured to determine the vehicle operation based on the information when the vehicle signal was not extracted by the signal extraction part (32).

5. The automatic response device (10) according to claim 1 or 2, further comprising an operation determination part (33) configured to determine a vehicle operation which should be executed in response to the inquiry text based on the vehicle signal extracted by the signal extraction part (32).

6. The automatic response device (10) according to claim 4 or 5, further comprising a feedback part (35) configured to acquire feedback of the user on the vehicle operation, wherein
the operation determination part (33) is configured to determine the vehicle operation based on a predetermined algorithm, and
the feedback part (35) is configured to improve the algorithm based on the feedback of the user.

7. The automatic response device (10) according to any one of claims 4 to 6, wherein the operation determination part (33) is configured to determine the vehicle operation based on the vehicle signal extracted by the signal extraction part (32) and an image generated by a camera (4).

8. The automatic response device (10) according to any one of claims 1 to 7, further comprising a data management part (36) configured to manage data stored in the memory part (14), wherein the data management part (36) is configured to add at least one of a new vehicle signal and a new vehicle operation need to the data in response to a predetermined trigger.

9. An automatic response method executed by a computer, including:
storing each of a plurality of vehicle signals linked to vehicle operation needs in a vector format;
vectorizing an inquiry text corresponding to an input from a user; and
extracting a vehicle signal suitable for the inquiry text from among the plurality of vehicle signals by comparing the vectorized inquiry text with the vehicle operation needs.

10. A computer program causing a computer to:
store each of a plurality of vehicle signals linked to vehicle operation needs in a vector format;
vectorize an inquiry text corresponding to an input from a user; and
extract a vehicle signal suitable for the inquiry text from among the plurality of vehicle signals by comparing the vectorized inquiry text with the vehicle operation needs.
